# EUROPÄISCHE PATENTSCHRIFT

(11) **EP 2 342 458 B1**
(45) Veröffentlichungstag und Bekanntmachung des Hinweises auf die Patenterteilung: **27.03.2019**
(21) Anmeldenummer: 09783739.7
(22) Anmeldetag: 05.10.2009
(51) Int. Cl.: F03G 6/06

(54) **SOLARHYBRIDBETRIEBENES GAS- UND DAMPFKRAFTWERK**
SOLAR HYBRID POWER PLANT WITH GAS AND STEAM POWER PLANT
CENTRALE SOLAIRE HYBRIDE À GAZ ET À VAPEUR

(30) Priorität: 11.10.2008 DE 102008051384
(43) Veröffentlichungstag der Anmeldung: 13.07.2011
(73) Patentinhaber: Technische Universität Dresden, 01069 Dresden (DE)
(72) Erfinder: HEIDE, Stephan, 01307 Dresden (DE); GAMPE, Uwe, 01816 Bad Gottleuba (DE); FREIMARK, Manfred, 14129 Berlin (DE)
(74) Vertreter: Sperling, Thomas
(86) Internationale Anmeldenummer: PCT/EP2009/062898
(87) Internationale Veröffentlichungsnummer: WO 2010/040712

(56) Entgegenhaltungen:
- WO-A1-96/31697
- DE-C1- 10 144 841
- US-A- 5 444 972

## Beschreibung

Die Erfindung betrifft ein solarhybridbetriebenes Gas- und Dampfkraftwerk, das eine Solaranlage, eine Gasturbinenanlage mit Abhitzekessel und eine Dampfturbinenanlage sowie einen Wärmeträgerkreislauf zur Nutzung solarer Wärme aufweist. Des Weiteren betrifft die Erfindung ein Verfahren zum solarhybriden Betrieb des Gas- und Dampfkraftwerks mit einem Gasturbinenprozess und einem Dampfturbinenprozess, in dem mittels eines Wärmeträgerkreislaufs solare Wärme in die Prozesse eingekoppelt wird.

Weltweit zunehmende Umweltprobleme, steigender Energiebedarf und Ressourcenverknappung erfordern neue Technologien von Kraftwerksanlagen, mit denen zum einen der Anteil erneuerbarer Energien stetig ausgebaut und zum anderen die kontinuierliche Versorgung sichergestellt wird. Neue Technologien umfassen unter anderem hybride Kraftwerksanlagen, deren Betrieb auf verschiedenen, miteinander kombinierbaren und austauschbaren Energieträgern basiert.

Zu den herkömmlichen Kraftwerken zählen Dampfkraftwerke, Gasturbinenkraftwerke sowie kombinierte Gas-Dampf-Kraftwerke, in denen die Prinzipien eines Gasturbinenkraftwerks und eines Dampfkraftwerks kombiniert werden. Sie werden zur konventionellen Erzeugung elektrischer Energie aus fossilen Brennstoffen genutzt. Im Dampfkraftwerk, in dem die fossilen Brennstoffe zum Verdampfen von Wasser dienen, wird mittels einer Dampfturbine, die wiederum einen Generator antreibt, die thermische Energie des Wasserdampfes in elektrische Energie umgewandelt. In einem Gasturbinenkraftwerk wird eine Gasturbine mit flüssigem oder gasförmigem kohlenwasserstoffbasiertem Brennstoff, wie beispielsweise Erdgas, betrieben. Die Gasturbine treibt ihrerseits ebenfalls einen Generator zur Stromerzeugung an. Die Abgase der Gasturbine weisen eine hohe Temperatur auf und können somit zur zusätzlichen Beheizung eines Abhitzekessels im kombinierten Gas-Dampf-Kraftwerk verwendet werden. Im kombinierten Gas-Dampf-Kraftwerk dient die Gasturbine, neben der direkten Erzeugung elektrischer Energie aus fossilen Brennstoffen also auch als Wärmequelle für den nachgeschalteten Abhitzekessel, der als Dampferzeuger für die Dampfturbine wirkt. Der Dampf wird anschließend über einen herkömmlichen Dampfturbinenprozess entspannt.

Neben der Nutzung der Abgaswärme der Gasturbine kann die Dampfleistung und damit die elektrische Leistung der Dampfturbine durch eine zusätzliche Befeuerung des Dampfkessels erhöht werden. Eine weitere Möglichkeit, anstelle der zusätzlichen Befeuerung, stellt die solarthermische Dampferzeugung dar. Diese Art der Dampferzeugung, auf Basis der Nutzung von Solarenergie, ist in der angegebenen Kombination mit einem kombinierten Gas-Dampf-Kraftwerk, einem fossilen Dampfkraftwerk mit Solarwärmeeinkopplung oder als autarkes Sonnenwärmekraftwerk möglich. Im Sonnenwärmekraftwerk oder Solarwärmekraftwerk wird die Strahlungsenergie der Sonne über Receiver, auch als Absorber oder Kollektor bezeichnet, in den Kraftwerksprozess eingekoppelt und so als primäre Energiequelle verwendet. Dabei wird die Strahlungsenergie der Sonne zur Energiegewinnung durch Bündeln der Direktstrahlung mit Reflektoren auf den Solarreceiver genutzt. Die Reflektoren weisen das einfallende Sonnenlicht konzentrierende Flächen auf. Der Receiver oder die Reflektoren werden meist der Sonne nachgeführt. In Solarturmkraftwerken und Parabolrinnenkraftwerken, als spezielle Ausführungen von Sonnenwärmekraftwerken, wird die Strahlung der Sonne mit Reflektoren konzentriert.

Bei Solarturmkraftwerken handelt es sich zumeist um Dampfkraftwerke mit solarer Dampferzeugung. Der im herkömmlichen Dampfkraftwerk mit fossilen Brennstoffen, wie Öl, Gas oder Kohle, befeuerte Dampferzeuger wird durch eine Einheit zur solaren Dampferzeugung, den Receiver oder Absorber, auf einem Turm ersetzt. Bei Sonnenschein richten sich automatisch positionierende Spiegel, sogenannte Heliostate, so aus, dass das Sonnenlicht auf den zentralen Receiver reflektiert wird. Dort wird die Strahlungsenergie in Form von Wärme an ein Wärmeträgermedium, wie Luft, flüssiges Salz oder das Prozessmedium Wasser/Dampf, übertragen. Der erwärmte Wärmeträger wird dann zum Beispiel zur Dampferzeugung in einem Dampfturbinenkraftwerk und zur anschließenden Elektroenergieerzeugung mittels eines an eine Turbine gekoppelten Generators genutzt.
Die Entwicklung der Parabolrinnenkraftwerke, die bereits sowohl in vorwiegend regenerativen Kraftwerken als auch in sogenannten ISCC-Kraftwerken (Integrated Solar Combined Cycle) eingesetzt werden, ist in Bezug auf Sonnenwärmekraftwerke am weitesten fortgeschritten. Parabolrinnenkraftwerke haben aufgrund des vergleichsweise geringen Temperaturniveaus den Vorteil der einfach zu realisierenden Wärmespeicherung zur Prozessabsicherung über mehrere Stunden. Die begrenzten oberen Prozesstemperaturen sind aber andererseits nachteilig für den Wirkungsgrad und die Kosten.

Im Stand der Technik sind solarbetriebene Anlagen in Kombination mit Dampfkreisprozessen bekannt.

In der DE 196 27 425 A1 wird eine Hybrid-Solar-Kombianlage, bestehend aus einer Gasturbogruppe, einer Dampfturbogruppe, einem Abhitzedampferzeuger und einem Solardampferzeuger, offenbart. Die Anlage ist für Hybrid-Solar-Kombibetrieb, reinen Solarbetrieb und Kombibetrieb ausgelegt. Im Hybrid-Solar-Kombibetrieb dient der Solardampferzeuger neben dem Abhitzedampferzeuger als zusätzlicher Dampferzeuger. Beim reinen Solarbetrieb und beim Kombibetrieb wird der Dampf entweder im Solardampferzeuger oder im Abhitzedampferzeuger bereitgestellt. Der erzeugte Dampf wird jeweils zum Betrieb der Dampfturbine verwendet. Die solar erzeugte Wärme wird ausschließlich in den Dampfprozess eingekoppelt.

Eine ähnliche Ausführung einer solarbetriebenen Anlage mit Gas- und Dampfturbine geht aus der US 5,444,972 A hervor. Die über einen Solarreceiver in einen Kreislauf eines Wärmeträgermediums eingekoppelte Solarwärme steht neben der Abgaswärme der Gasturbine im Abhitzekessel zusätzlich für die Dampferzeugung zur Verfügung. Auch bei dieser Anlage wird die Solarwärme nur im Dampfprozess genutzt.

Die WO 96/31697 A1 offenbart ebenfalls ein System mit einem Wärmeträgerkreislauf für die Integration von Sonnenenergie in eine konventionelle Wärmekraftwerksanlage zur Erzeugung elektrischer Energie mittels einer Dampf- und einer Gasturbine. Die von einem Receiver aufgenommene Solarenergie wird dabei zur Konditionierung des Dampfes der Dampfturbinenanlage verwendet. Der Dampf wird innerhalb eines Solardampferzeugers generiert, welcher innerhalb des Wärmeträgerkreislaufes angeordnet mit einem Teil des Kreislaufes des Speisewassers der Dampfturbinenanlage gekoppelt ist.

Auch aus der DE 41 26 036 A1, der DE 41 26 037 A1 und der DE 41 26 038 A1 gehen Gas- und Dampfturbinenkraftwerke mit zusätzlichen Anlagen zur solaren Dampferzeugung hervor, die jeweils an der Speisewasserversorgung des Dampfturbinenkraftwerks angeschlossen sind. Die Anlage zur solaren Dampferzeugung nach der DE 41 26 036 A1 mündet in die vom Abhitzedampferzeuger zur Dampfturbine führende Hochdruckdampfleitung, so dass der an den Hochdrucküberhitzerheizflächen des Abhitzedampferzeugers erzeugte Dampf mit dem des solaren Dampferzeugers vermischt und zur Dampfturbine geleitet wird.
Sowohl bei dem in der DE 41 26 037 A1 als auch bei dem in der DE 41 26 038 A1 offenbarten Kraftwerk ist die Anlage zur solaren Dampferzeugung direkt an den Hochdrucküberhitzerheizflächen des Abhitzedampferzeugers angeschlossen. Das aus der DE 41 26 037 A1 hervorgehende Kraftwerk weist zudem eine Hochdruck-, Mitteldruck- und Niederdruckdampfturbine auf. Die solare Dampferzeugung ist dabei zusätzlich an das Mitteldruckdampfsystem des Dampfturbinenprozesses angebunden. Bei den genannten Gas- und Dampfturbinenkraftwerken wird die solar erzeugte Wärme lediglich in den Dampfturbinenprozess eingespeist.

In der DE 20 2008 002 599 U1 wird ein solarthermisches Hybrid-Kraftwerk mit einem solarthermisch beheizten Wärmeträgermedium-Kreislauf und einem damit über eine Dampferzeugungsstufe thermisch gekoppelten Dampf-/Wasserkreislauf einer Turbinenstufe offenbart. Im Dampf-/Wasserkreislauf ist ein dem solarthermischen Überhitzer nachgeschalteter, vom Wärmeträgerkreislauf entkoppelter Überhitzer angeordnet. Der Wärmeträgerkreislauf ist geschlossen. Als Wärmeträgermedium wird Thermoöl oder Wasser verwendet, dessen Wärme in Wärmeübertragern an den eigentlichen Dampfturbinenprozess übertragen wird. Bei diesem Kraftwerk, mit eingespeister solarthermischer Wärme, handelt es sich um ein reines Dampfkraftwerk.

Außerdem ist im Stand der Technik eine Gasturbinenanlage mit im Prozess eingekoppelter Solarwärme bekannt. Bei dieser Solarhybrid-Gasturbinenanlage handelt es sich um eine Versuchsanlage mit einem modifizierten Helikopter-Triebwerk, das sich im Solarturm befindet und bei dem die Verbrennungsluft zwischen Verdichteraustritt und Brennkammereintritt solar aufgeheizt wird. Die Gasturbine ist im Turm in der Nähe der Receiver angeordnet und dadurch für größere Anlagen problematisch.

Aus der US 5,417,052 A geht ein Gas- und Dampfturbinenkraftwerk in Kombination mit der Einkopplung von Solarwärme in die Gasturbinenanlage hervor. Die mittels eines Solarreceivers in thermische Energie umgewandelte Strahlungsenergie der Sonne wird über ein Wärmeträgermedium vom Receiver zu einem Wärmeübertrager transportiert, der für die Erwärmung der komprimierten Verbrennungsluft vorgesehen ist. Die mit Solarenergie erwärmte Luft wird anschließend der Brennkammer zugeführt. Die solar erzeugte Wärme wird dabei ausschließlich in den Gasprozess eingekoppelt.

Im Stand der Technik sind solarthermische Kraftwerksanlagen entweder in Kombination mit Dampfturbinenanlagen oder in Kombination mit Gasturbinenanlagen zwar bekannt, weisen aber diverse Nachteile auf. So sind hohe Prozesstemperaturen und damit hohe solare Anteile der Wärmezufuhr im Zusammenspiel der unterschiedlichen Primärenergien bislang nur mit Einschränkungen zu erreichen. Die gewünschte hohe Prozesstemperatur wirkt außerdem der Möglichkeit einer Wärmespeicherung entgegen, so dass in Zeiten geringer Solarstrahlung zusätzlich, meist mit fossilen Brennstoffen, beheizt werden muss. Andererseits verursachen geringe Prozesstemperaturen einen geringen Wirkungsgrad. Bei hohen Prozesstemperaturen lässt sich wiederum nur ein geringer solarer Anteil der Wärmezufuhr im Hybridkraftwerk realisieren. Aus genannten Gründen wird bisher nachteilig ein Kompromiss zwischen hoher Prozesstemperatur, solarem Anteil der Wärmezufuhr und Versorgungssicherheit beziehungsweise Versorgungsgüte an Elektroenergie eingegangen.
Außerdem bleibt der Einsatz von Gasturbinenanlagen mit im Prozess eingekoppelter Solarwärme auf kleine Anlagen beschränkt, solange die Gasturbine in der Nähe der Receiver positioniert werden muss.

Aufgabe der vorliegenden Erfindung ist es, eine Anlage und ein Verfahren zur Verfügung zu stellen, die den Wärmetransport und die Einkopplung von solarer Wärme in den Prozess eines Gas- und Dampfkraftwerks ermöglicht, wobei die Orte der Aufnahme solarer Wärme und der Einkopplung dieser Wärme in den Prozess räumlich voneinander getrennt sind. Es ist ein hoher Anteil der für den Prozess benötigten Wärme aus solarer Energie bereitzustellen, um den Verbrauch fossiler Energieträger zu reduzieren.

Die Aufgabe wird erfindungsgemäß durch ein solarhybridbetriebenes Gas- und Dampfkraftwerk, das eine Solaranlage mit einem Receiver, eine Gasturbinenanlage mit einem Verdichter, einer Brennkammer und einer Gasturbine mit einem nachgeschalteten Abhitzekessel und eine Dampfturbinenanlage mit einer Dampfturbine und einem Speisewasservorwärmer aufweist, gelöst. Die Gasturbinenanlage und die Dampfturbinenanlage sind über den Abhitzekessel und den darin angeordneten Speisewasservorwärmer miteinander gekoppelt. Die Gasturbine wird mit flüssigem oder gasförmigem kohlenwasserstoffbasierten Brennstoff betrieben. In der Dampfturbine wird Wasserdampf entspannt. Neben dem Speisewasservorwärmer können im Abhitzekessel zusätzlich ein Economizer, ein Verdampfer, ein Überhitzer sowie weitere Wärmeübertrager zur Wärmeauskopplung vorgesehen sein.
Nach Konzeption der Erfindung wird mit einem zusätzlich integrierten Wärmeträgerkreislauf solar erzeugte Wärme an den Kraftwerksprozess übertragen, wobei der Wärmeträgerkreislauf über einen Gasturbinenwärmeübertrager mit der Gasturbinenanlage und über einen Solarkessel mit der Dampfturbinenanlage gekoppelt ist. Dabei ist der Gasturbinenwärmeübertrager innerhalb der Gasturbinenanlage zwischen einem Verdichter und einer Brennkammer und innerhalb des Wärmeträgerkreislaufs in Strömungsrichtung nach dem Receiver angeordnet.

Nach einer alternativen Ausgestaltung der Erfindung weist das solarhybridbetriebene Gas- und Dampfkraftwerk eine Solaranlage mit einem Receiver und eine integrierte Gas-Dampf-Turbine mit einem nachgeschalteten Abhitzekessel anstelle der Gasturbinenanlage mit Gasturbine und der Dampfturbinenanlage mit Dampfturbine auf. Mit dem zusätzlich integrierten Wärmeträgerkreislauf wird solar erzeugte Wärme übertragen, wobei der Wärmeträgerkreislauf über den Gasturbinenwärmeübertrager und über den Solarkessel mit der integrierten Gas-Dampf-Turbine gekoppelt ist.
Mit einer integrierten Gas-Dampf-Turbine wird der Gasturbinenprozess als integrierter Gas-Dampf-Prozess betrieben. Dabei wird dem Gas des Gasturbinenprozesses vor dem Eintritt in die integrierte Gas-Dampf-Turbine überhitzter Dampf beigemischt oder die Verdichterluft mit Wasserdampf gesättigt.
Der Gasturbinenwärmeübertrager, als thermische Verbindung zwischen dem Wärmeträgerkreislauf und der Gasturbinenanlage, ist bevorzugt zwischen dem Verdichter und der Brennkammer der Gasturbinenanlage und in Strömungsrichtung direkt nach dem Receiver des Wärmeträgerkreislaufs angeordnet.

Die Turbinen treiben erfindungsgemäß mindestens einen Generator an, wobei die Turbinen in Verbindung mit einem Generator als einwellige und in Verbindung mit mehreren Generatoren als mehrwellige Anlagen ausgebildet sein können. Bei einwelligen Anlagen sind bevorzugt geeignete Kupplungen einsetzbar, die die separate Betriebsweise sowie das separate An- und Abfahren der Turbinen ermöglichen. Einwellige Anlagen sind auf Grund des Einsatzes lediglich eines Generators zudem mit geringeren Investitionskosten verbunden.

Der Abhitzekessel der Gasturbinenanlage und der Solarkessel des Wärmeträgerkreislaufs sind vorteilhaft sowohl in Reihenschaltung als auch in Parallelschaltung zueinander in die Dampfturbinenanlage integrierbar.

Nach einer bevorzugten Ausgestaltung der Erfindung strömt ein Wärmeträgermedium innerhalb des Wärmeträgerkeislaufs, der geschlossen ausgeführt ist. Als Wärmeträgermedium sind erfindungsgemäß Gase, wie Luft, Kohlendioxid, Helium oder Stickstoff, verwendbar. Von Vorteil ist, dass das gasförmige Wärmeträgermedium druckbeaufschlagt ist, das heißt der Druck im Wärmeträgerkreislauf über dem Umgebungsdruck liegt. Außerdem ist das Druckniveau zwischen 1 und 20 bar durch ein Druckregelsystem regelbar. Je höher der Druck ist, desto größer sind die volumetrische Wärmekapazität und die Dichte der Gase. Der Betrieb bei höherem Druck hat also den Vorteil des Einsatzes von Transportleitungen mit deutlich geringerem Durchmesser, als zum Beispiel beim Betrieb auf Umgebungsdruck.
Bekannte Anlagen werden beispielsweise mit geschmolzenem Salz mit hoher Wärmekapazität betrieben. Das Salz kann jedoch nachteilig zum einen korrodierend wirken, und zum anderen besteht die Gefahr des Erstarrens in den Transportleitungen. Bei Verwendung eines gasförmigen Wärmeträgermediums treten diese Nachteile nicht auf.

Der Wärmeträgerkreislauf weist erfindungsgemäß mindestens ein Umlaufgebläse auf, dass an verschiedenen Positionen im Kreislauf angeordnet werden kann.

Der Receiver des Wärmeträgerkreislaufs ist bevorzugt als Turmreceiver ausgebildet, in dem die solare Energie an das Wärmeträgermedium übertragen wird. Damit ist es möglich, die Wärme bei vorteilhaft hohen Temperaturen, die mit Turmkraftwerken erreicht werden können, in den herkömmlichen Prozess des Gas- und Dampfkraftwerks einzubinden.

Nach einer Ausgestaltung der Erfindung weist der Wärmeträgerkreislauf im Hochtemperaturabschnitt zwischen dem Turmreceiver und dem Gasturbinenwärmeübertrager außerdem Kurzzeitwärmespeicher zum Ausgleich kurzzeitiger Veränderungen der solaren Einstrahlung auf. Infolge der stark verringerten Temperaturgradienten kann der Einsatz der Kurzzeitwärmespeicher zum Beispiel das Regelverhalten der Gasturbine und die Lebensdauer der Anlagen-Komponenten positiv beeinflussen.
Bevorzugt ist innerhalb des Wärmeträgerkreislaufs zudem ein Hochtemperaturwärmespeicher mit einem zusätzlichen Umlaufgebläse integriert. In dem Hochtemperaturwärmespeicher ist die im Turmreceiver vom Wärmeträgermedium aufgenommene Wärme vorteilhaft speicherbar.
Mit der Energie der Wärmespeicher können Schwankungen der aus der Solarenergie aufgenommenen Wärme für die Gesamtanlage ausgleichend geregelt werden, indem der fehlende Anteil an aus solarer Energie umgewandelter Wärme durch gespeicherte Wärme ausgeglichen wird. Ansonsten ist der Minderbetrag an Wärme auch durch Zufuhr von Brennstoff in den Gasturbinenprozess zu ersetzen.

Der Wärmeträgerkreislauf wird in üblicher Weise über Ventile und Bypässe betriebsabhängig beeinflusst. Nach einer bevorzugten Ausgestaltung der Erfindung weist der Wärmeträgerkreislauf einen Bypass um den Gasturbinenwärmeübertrager auf, so dass insbesondere die Temperatur des Wärmeträgermediums in Strömungsrichtung nach dem Gasturbinenwärmeübertrager geregelt wird. Je nach Massenstrom des Wärmeübertragermediums und Grädigkeit des Gasturbinenwärmeübertragers ist die Temperatur des Wärmeübertragermediums trotz Wärmeabgabe höher als die Verdichteraustrittstemperatur der Gasturbine. Der Bypass um den Gasturbinenwärmeübertrager kann zum einen den abgekühlten Massenstrom des Wärmeübertragermediums wieder erwärmen oder zum anderen auch separat, beispielsweise zur Überhitzung von Wasserdampf, genutzt werden. Die hohe Eintrittstemperatur des Wärmeübertragermediums in den Solarkessel, die vorteilhaft über 500°C liegt, kann nun in dem in Strömungsrichtung nachfolgend angeordneten Solarkessel zur Dampferzeugung dienen. Der Solarkessel ist dabei als vollständiger Kessel mit einem Wärmeübertrager, der vom Wärmeübertragermedium innerhalb des Wärmeträgerkreislaufes durchströmt wird und in dem Wärme vom Wärmeübertragermedium an den Wasserdampfkreislauf beziehungsweise Dampfprozess übertragen wird, ausgebildet.
Für einen konstanten Betrieb des Dampfturbinenprozesses, das heißt das Einhalten einer konstanten Eintrittstemperatur und eines konstanten Massenstromes des Wärmeübertragermediums in den Solarkessel, kann je nach solarer Einstrahlung Wärme über den Gasturbinenwärmeübertrager an den Gasturbinenprozess übertragen werden. Die veränderte solare Einstrahlung wird durch Brennstoffzufuhr im Gasturbinenprozess ausgeglichen.

Beim erfindungsgemäßen solarhybridbetriebenen Gas- und Dampfkraftwerk sind nach einer bevorzugten Ausgestaltung sowohl im Abhitzekessel als auch im Solarkessel jeweils ein Economizer angeordnet, in denen das Speisewasser des Dampfturbinenprozesses vorgewärmt wird.
Nach einer alternativen Ausgestaltung der Erfindung ist nur im Abhitzekessel ein Economizer angeordnet, in dem das Speisewasser des Dampfprozesses vorgewärmt und anschließend auf die Verdampfer im Solarkessel und im Abhitzekessel aufgeteilt wird. Dabei ist vorteilhaft die Aufteilung des gesamten Massenstromes des Speisewassers zwischen der Leitung zum Verdampfer im Solarkessel und zum Verdampfer im Abhitzekessel stufenlos variierbar. Während der Massenstrom zum Abhitzekessel annähernd konstant bleibt, kann der Massenstrom zum Solarkessel von Null bis zu einem Vielfachen des Massenstromes zum Abhitzekessel betragen. Die Variation des Gesamtmassenstromes erfolgt durch die Kesselspeisepumpe.

Nach einer bevorzugten Ausgestaltung der Erfindung weist der Dampfturbinenprozess zusätzlich einen Zwischenüberhitzer auf, der sowohl innerhalb des Solarkessels beziehungsweise Wärmeträgerkreislaufes als auch innerhalb des Abhitzekessels integrierbar ist. Der Zwischenüberhitzer ist konzeptionsgemäß jeweils in Reihe oder parallel zum Überhitzer schaltbar. Bei der Zwischenüberhitzung wird dem bereits zum Teil entspannten Dampf der Dampfturbine, zum Beispiel im Zwischenüberhitzer des Wärmeübertragerkreislaufs, vorteilhaft zusätzliche Wärme zugeführt. Die Zwischenüberhitzung bewirkt eine deutliche Erhöhung der Kreisprozessarbeit beziehungsweise der Elektroenergieerzeugung und gleichermaßen eine Verringerung des spezifischen Brennstoffwärmeverbrauches. Im Zusammenhang mit dem Solarkessel führt dies zudem zu einer deutlichen Steigerung des Solarwärmeanteils in der Stromerzeugung.

Das erfindungsgemäße Verfahren zum Betrieb eines konzeptionsgemäßen solarhybridbetriebenen Gas- und Dampfkraftwerks mit einem Gas- und Dampfturbinenprozess ist dadurch charakterisiert, dass mittels eines Wärmeträgerkreislaufs mit einem Gasturbinenwärmeübertrager und einem Solarkessel solare Wärme sowohl in den Gasturbinenprozess als auch in den Dampfturbinenprozess eingekoppelt wird.

Als Gas- und Dampfturbinenprozess ist im Weiteren ein kombinierter Gas- und Dampfturbinenprozess, wie er in einem kombinierten Gas-Dampf-Kraftwerk zur Anwendung kommt, oder ein integrierter Gas-Dampf-Prozess mit integrierter Gas-Dampf-Turbine zu verstehen.

Konzeptionsgemäß wird im Gasturbinenprozess eine Gasturbine und im Dampfturbinenprozess eine Dampfturbine betrieben, wobei die Turbinen mindestens einen Generator antreiben.

Nach einer alternativen Ausgestaltung der Erfindung wird der Gasturbinenprozess als integrierter Gas-Dampf-Prozess, beispielsweise als STIG-(steam injected gasturbine)Prozess, HAT-(humid air turbine)-Prozess oder EVGT-(evaporative-gas-turbine-)Prozess mit einer Verdampfungsgasturbine, betrieben. Dabei wird der im Solarkessel oder im Abhitzekessel erzeugte und überhitzte Dampf vorteilhaft mit dem Gas entweder in Strömungsrichtung zwischen dem Verdichter und dem Gasturbinenwärmeübertrager, zwischen dem Gasturbinenwärmeübertrager und der Brennkammer oder nach der Brennkammer vermischt. Diese alternative Ausgestaltung der Erfindung wird vor allem für den Einsatz von Anlagen im kleineren und mittleren Leistungsbereich auf Grund geringer Investitionskosten bevorzugt. Da die im Abhitzekessel erzeugbare Dampfmenge beschränkt ist, ist es auch bei integrierten Gas-Dampfschaltungen von Vorteil, die Dampferzeugung durch Solarwärme zu erhöhen.

Einen weiteren Vorteil der gemeinsamen Nutzung des Speisewasservorwärmers und des Economizers stellt die niedrige Abgastemperatur dar. Da es sich bei dem im Abgas enthaltenen Wasser um kostenintensives Deionat handelt und dieses deshalb nicht mit dem Abgas aus dem Prozess entweichen sollte, erspart die niedrige Abgastemperatur einen großen Anteil des zur Kondensation des Deionats notwendigen Kühlaufwandes.

Das gasförmige Wärmeträgermedium strömt innerhalb eines geschlossenen Wärmeträgerkreislaufs und vorteilhaft unter einem aufgeprägten Überdruck, wobei das Druckniveau des gasförmigen Wärmeträgermediums, das bevorzugt zwischen 1 und 20 bar liegt, von außen durch ein Druckregelsystem geregelt wird.

Erfindungsgemäß wird vorteilhaft mittels des Massenstroms durch den im Wärmeträgerkreislauf um den Gasturbinenwärmeübertrager angeordneten Bypass die Temperatur des Wärmeträgermediums in Strömungsrichtung nach dem Gasturbinenwärmeübertrager und vor dem Solarkessel zwischen 500°C und 600°C geregelt.

Nach einer alternativen Ausgestaltung der Erfindung, bei der lediglich im Abhitzekessel ein Economizer angeordnet und das in diesem Economizer vorgewärmte Speisewasser des Dampfprozesses auf den Verdampfer im Solarkessel und den Verdampfer im Abhitzekessel aufgeteilt wird, wird vorteilhaft die Aufteilung des Massenstroms des Speisewassers zwischen den Verdampfern stufenlos geregelt.

Nach weiteren Ausgestaltungen der Erfindung kann in Strömungsrichtung des Wärmeträgermediums im Wärmeträgerkreislauf nach dem Economizer des Solarkessels ein zusätzlicher elektroenergieerzeugender Prozess beziehungsweise der dazugehörige Wärmeübertrager angeordnet werden. Dieser integrierte elektroenergieerzeugende Prozess kann vorteilhaft zum Beispiel nach dem Prinzip des Organic-Rankine-Cycles (ORC) betrieben werden. ORC-Anlagen sind Dampfkraftanlagen, die zur Nutzung der aus Prozessen bei geringer Temperatur anfallenden Abwärme mit organischen Arbeitsmitteln anstelle von Wasser betrieben werden.

Neben dem zusätzlich integrierten elektroenergieerzeugenden Prozess ist erfindungsgemäß ebenfalls der Wärmeübertrager einer Absorbtionskälteanlage, einer Prozessdampferzeugungsanlage oder einer Wärmeversorgungsanlage im Wärmeträgerkreislauf anordenbar.

Nach einer bevorzugten Ausgestaltung der Erfindung wird das Druckniveau im Abhitzekessel durch die im Kraftwerksbetrieb übliche Gleitdruckfahrweise in Abhängigkeit der solaren Wärme geregelt.

Der Dampfprozess kann vorteilhaft als Mehrdruckprozess ausgeführt werden, wobei der Solarkessel und der Abhitzekessel als Mehrdruckkessel ausbildbar sind. Die unterschiedlichen Druckstufen liegen für einen 3-Druck-Prozess üblicherweise zwischen 130 und 140 bar in der ersten Stufe, zwischen 50 und 60 bar in der zweiten Druckstufe sowie bei etwa 10 bar in der dritten Druckstufe. Das erfindungsgemäße Verfahren zum Betrieb des solarhybridbetriebenen Gas- und Dampfkraftwerks als Mehrdrucksystem ermöglicht auch, nur den Solarkessel mit hohem Druck zu beaufschlagen, während der Abhitzekessel auf einer niederen oder auf mehreren Druckstufen betrieben wird.

Zusammenfassend ist festzustellen, dass das erfindungsgemäße solarhybridbetriebene Gas- und Dampfkraftwerk sowie das Verfahren zum Betrieb des Kraftwerks wesentliche Vorteile gegenüber dem Stand der Technik aufweist. Die Erfindung ermöglicht eine deutliche Erhöhung des aus Solarenergie umgewandelten Wärmeanteils und eine damit verbundene vorteilhafte Einsparung an fossilem Brennstoff gegenüber bisher bekannten Anlagen und Verfahren. Es ist eine sehr effektive und ressourcenschonende Ausregelung des variierenden Solarwärmeangebotes durch verschiedene Wärmespeicher und die variable Zufuhr von Brennstoff in die Brennkammer der Gasturbinenanlage möglich. Damit ist auch die volle Verfügbarkeit der Kraftwerksanlage über lange Zeiträume gewährleistet und ein höherer Jahreswirkungsgrad im Gegensatz zu den zum Stand der Technik gehörenden Kraftwerken auf der Basis der Nutzung solarer Energie zu erreichen.
Mit hohen Temperaturen des Arbeitsfluids am Eintritt der Turbine, insbesondere der Gasturbine, und damit verbundenen hohen Auslasstemperaturen des Wärmeträgermediums aus dem solaren Strahlungsempfänger, die mit dem Turmreceiver erreicht werden, kann ein hoher Wirkungsgrad der Anlage erzielt werden.
Das im geschlossenen Wärmeträgerkreislauf geführte, gasförmige Wärmeträgermedium wird sich beim Stillstand der Anlage nicht verfestigen und die Strömung auf Grund von Ablagerungen innerhalb der Rohre nicht behindern. Auch eine Verschmutzung ist durch die geschlossene Ausführung des Kreislaufes minimiert.
Die Konzeption der Erfindung ermöglicht auf Grund der Wärmeübertragung mittels Wärmeträgerkreislauf die bevorzugte bodennahe Aufstellung der Kraftwerkskomponenten, insbesondere der Turbinenanlagen.

Außerdem ist die Auslegung der Komponenten des Solarkreislaufes beziehungsweise des Wärmeträgerkreislaufes vorteilhaft der Art möglich, dass sowohl die heutige Technologie, als auch zukünftige Maschinen und Anlagen auf einfache Weise im Kraftwerksprozess integrierbar sind, da der Wärmeträgerkreislauf unabhängig vom übrigen Kraftwerksprozess ist.

Weitere Einzelheiten, Merkmale und Vorteile der Erfindung ergeben sich aus der nachfolgenden Beschreibung mit Bezugnahme auf die zugehörigen Zeichnungen, in denen vereinfachte Schaltbilder des solarhybridbetriebenen Kraftwerks mit primärem solaren Wärmeträgerkreislauf dargestellt sind. Es zeigt:
- Fig. 1:: Gas- und Dampfkraftwerk mit jeweils einem Economizer im Solarkessel und Abhitzekessel,
- Fig. 2:: Gas- und Dampfkraftwerk mit Economizer ausschließlich im Abhitzekessel,
- Fig. 3:: Gas- und Dampfkraftwerk mit jeweils einem Economizer im Solarkessel und Abhitzekessel sowie Zwischenüberhitzung des Dampfes im Dampfkraftprozess im Solarkessel,
- Fig. 4:: Gas- und Dampfkraftwerk mit Economizer ausschließlich im Abhitzekessel sowie Zwischenüberhitzung des Dampfes im Dampfkraftprozess im Solarkessel,
- Fig. 5:: Integriertes Gas-Dampf-Kraftwerk mit jeweils einem Economizer im Solarkessel und Abhitzekessel,
- Fig. 6:: Integriertes Gas-Dampf-Kraftwerk mit Economizer ausschließlich im Abhitzekessel.

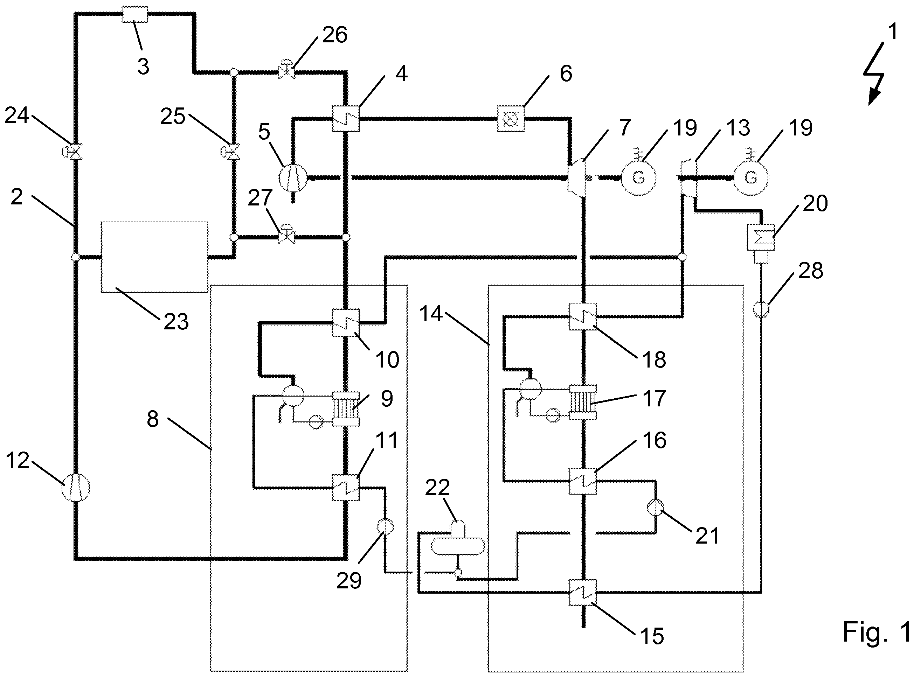

In Fig. 1 ist das vereinfachte Schaltbild des solarhybridbetriebenen Gas- und Dampfkraftwerks 1 mit primärem solaren Wärmeträgerkreislauf 2 mit jeweils einem Economizer 11, 16 im Solarkessel 8 und Abhitzekessel 14, in denen das Speisewasser der Dampfturbinenanlage vorgewärmt wird, dargestellt. Das Kraftwerk besteht im Wesentlichen aus einer Gasturbinenanlage mit Verdichter 5, Brennkammer 6 und Gasturbine 7 mit nachgeschaltetem Abhitzekessel 14, der auch eine Komponente der Dampfturbinenanlage darstellt. Das heiße Abgas der Gasturbine 7 wird im Abhitzekessel 14 zur Erzeugung von überhitztem Dampf genutzt. Parallel dazu kann der Dampf auch im Solarkessel 8 bereitgestellt werden. Dem im Verdampfer 9, 17 bei Sättigungstemperatur verdampften Wasser wird im Überhitzer 10, 18 weitere Wärme zugeführt. Durch das weitere Erwärmen des Dampfes nehmen die Temperatur und das spezifische Volumen des Dampfes zu, er wird dabei überhitzt. Vom Solarkessel 8 und vom Abhitzekessel 14 strömt der Dampf über Rohrleitungen in die Dampfturbine 13, in der die Fluidmenge des Dampfes infolge der Abgabe technischer Arbeit abnimmt. Die Dampfmassenströme aus Solarkessel 8 und Abhitzekessel 14 werden vor dem Eintritt in die Dampfturbine 13 gemischt.

Ebenso wie die Gasturbine 7 ist die Dampfturbine 13 mit einem Generator 19 gekoppelt, der die mechanische Leistung in elektrische Leistung umwandelt. Danach strömt der entspannte und abgekühlte Dampf in den Dampfturbinenkondensator 20, in dem er durch Wärmeübertragung an die Umgebung kondensiert. Das kondensierte Wasser wird durch die Kondensatpumpe 28 und anschließend durch den Speisewasservorwärmer 15 im Abhitzekessel 14 der Gasturbine 7 geleitet und dabei vorgewärmt. Zudem wird die Temperatur des Abgases der Gasturbine verringert. Damit wird vorteilhaft der Wirkungsgrad der Anlage erhöht. Das erwärmte Speisewasser wird im Speisewasserbehälter 22 zwischengespeichert. Nachfolgend wird das Wasser über Speisepumpen 21, 29 erneut dem Solarkessel 8 und dem Abhitzekessel 14 zugeführt.

Die auf den geschlossenen Wärmeträgerkreislauf 2 übertragene Solarwärme wird erfindungsgemäß über den Gasturbinenwärmeübertrager 4 an den Gasturbinenprozess sowie über den Verdampfer 9 und den Überhitzer 10 des Solarkessels 8 an den Dampfturbinenprozess übertragen. Das gasförmige Wärmeträgermedium, wie Luft, Kohlendioxid, Helium oder Stickstoff, strömt nach der Konzeption der Erfindung unter einem Überdruck, der von außen mit Hilfe eines Druckhaltesystems aufgeprägt wird. Das Umlaufgebläse 12 bewirkt einen Druckunterschied und damit die Strömung des Wärmeträgermediums. Bei Bedarf und entsprechender Schaltung des Wärmeträgerkreislaufes 2 sind weitere Umlaufgebläse und Ventile zum Absperren beziehungsweise Regeln an anderen Positionen des Wärmeträgerkreislaufes 2 positionierbar. Das Umlaufgebläse 12 ist wegen des spezifisch geringsten Energieaufwandes und der materialschonenden Temperaturen sinnvoller Weise an der kältesten Stelle des Wärmeträgerkreislaufes 2 angeordnet.

Die solare Energie wird nach einer vorteilhaften Ausgestaltung der Erfindung innerhalb eines Receivers, insbesondere Turmreceivers 3, als Wärme auf das Wärmeträgermedium übertragen. Ein Teil der vom Wärmeträgermedium im Turmreceiver 3 aufgenommenen Wärme wird im Gasturbinenwärmeübertrager 4, der zwischen dem Verdichter 5 und der Brennkammer 6 der Gasturbinenanlage und in Strömungsrichtung nach dem Turmreceiver 3 des Wärmeträgerkreislaufs 2 angeordnet ist, an die Gasturbinenanlage übertragen. Das Wärmeträgermedium strömt dabei durch das Ventil 26, wobei die Ventile 25 und 27 geschlossen sind. Die vom Verdichter 5 komprimierte Verbrennungsluft wird vorteilhaft im Gasturbinenwärmeübertrager 4 erwärmt und im erwärmten Zustand der Brennkammer 6 zugeführt. Auf diese Weise wird der spezifische Brennstoffwärmeverbrauch im Gasturbinenprozess verringert.
Bei geschlossenem Ventil 26 strömt das heiße Wärmeträgermedium konzeptionsgemäß durch die Ventile 25 und 27 direkt zum Solarkessel 8. Von Vorteil ist, dass mit Hilfe des Bypasses und somit den Anteilen des Massenstromes durch das Ventil 26 beziehungsweise die Ventile 25 und 27 die Temperatur des Wärmeträgermediums in Strömungsrichtung nach dem Gasturbinenwärmeübertrager 4 geregelt werden kann.

Während der Gasturbinenwärmeübertrager 4 die Verbindung zwischen dem Wärmeträgerkreislauf 2 und der Gasturbinenanlage herstellt, verbindet der Solarkessel 8 mit integriertem Verdampfer 9 und Überhitzer 10 den Wärmeträgerkreislauf 2 mit der Dampfturbinenanlage. Nach der Konzeption der Erfindung wird im Überhitzer 10 Wärme vom heißen Wärmeträgermedium an den Dampf übertragen, der dabei vorteilhaft überhitzt wird. Das Wärmeübertragermedium kühlt sich dabei ab. Auf dem weiteren Strömungsweg wird die Wärme vom Wärmeübertragermedium innerhalb des Verdampfers 9 und des Economizers 11 an den Dampf übertragen.
Zur besseren Regelung der Temperaturen im Wärmeträgerkreislauf 2 kann die vom Wärmeträgermedium im Turmreceiver 3 aufgenommene solare Wärme innerhalb des Hochtemperaturwärmespeichers 23 gespeichert werden. Mit der gespeicherten Energie werden vorteilhaft Schwankungen der aus Solarenergie übertragenen Wärme durch Regelung ausgeglichen. Die gespeicherte Energie kann im Bedarfsfall zugeführt werden, wenn das Wärmeträgermedium durch den Hochtemperaturwärmespeicher 23 und die Ventile 25 beziehungsweise 27 strömt. Gleichzeitig kann das Ventil 24 zumindest zum Teil verschlossen werden.
Nach einer alternativen Ausgestaltung der Erfindung ist die Wärme auch innerhalb des Wasserdampfkreislaufes der Dampfturbinenanlage speicherbar.

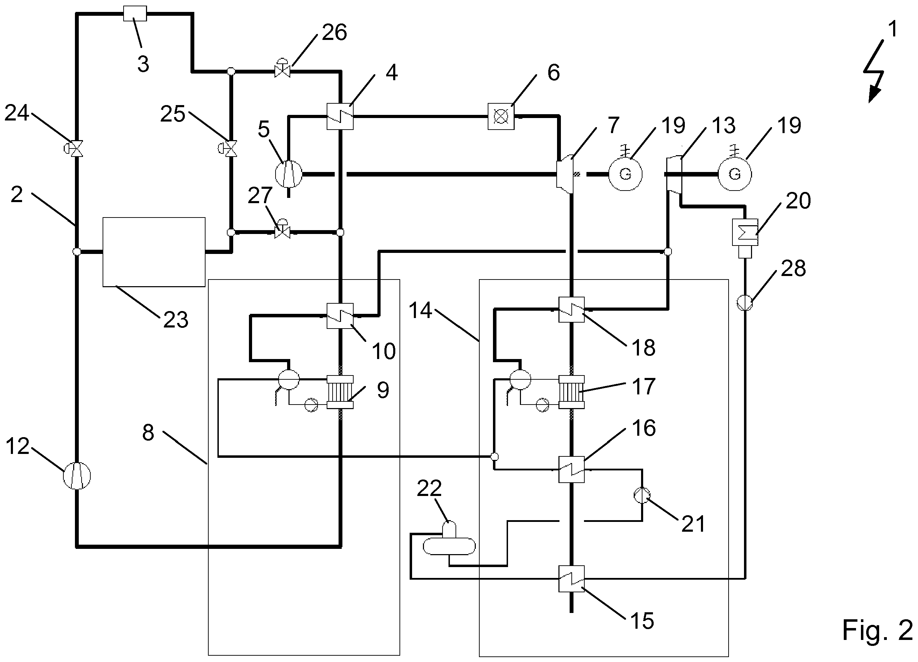

Fig. 2 zeigt das vereinfachte Schaltbild des solarhybridbetriebenen Gas- und Dampfkraftwerks 1 mit primärem solaren Wärmeträgerkreislauf 2, wobei lediglich der Economizer 16 zum Vorwärmen des Speisewassers der Dampfturbinenanlage vorhanden ist. Der Unterschied zum Schaltbild aus Fig. 1 besteht darin, dass das Speisewasser lediglich im Abhitzekessel 14 vorgewärmt wird. Mit einem gemeinsamen Economizer 16 im Abhitzekessel 14 wird die Temperatur des Abgases der Gasturbinenanlage zusätzlich verringert und damit der Wirkungsgrad der Anlage erhöht.
Konzeptionsgemäß kann das im Economizer 16 vorgewärmte Speisewasser auf die Verdampfer 9 im Solarkessel 8 und Verdampfer 17 im Abhitzekessel 14 verteilt werden, wobei die Aufteilung zwischen der Leitung des gesamten Massenstroms des Speisewassers zum Verdampfer 9 im Solarkessel 8 und zum Verdampfer 17 im Abhitzekessel 14 stufenlos geregelt werden kann. Damit lassen sich die veränderlichen Wärmen des Abgases der Gasturbinenanlage und des Wärmeträgermediums vorteilhaft ausgleichen.

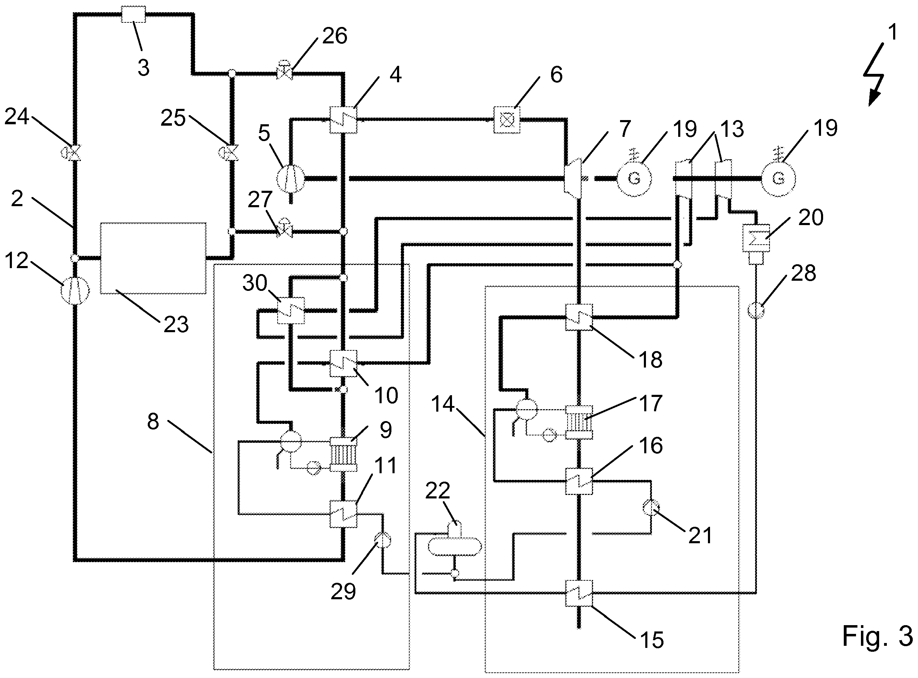

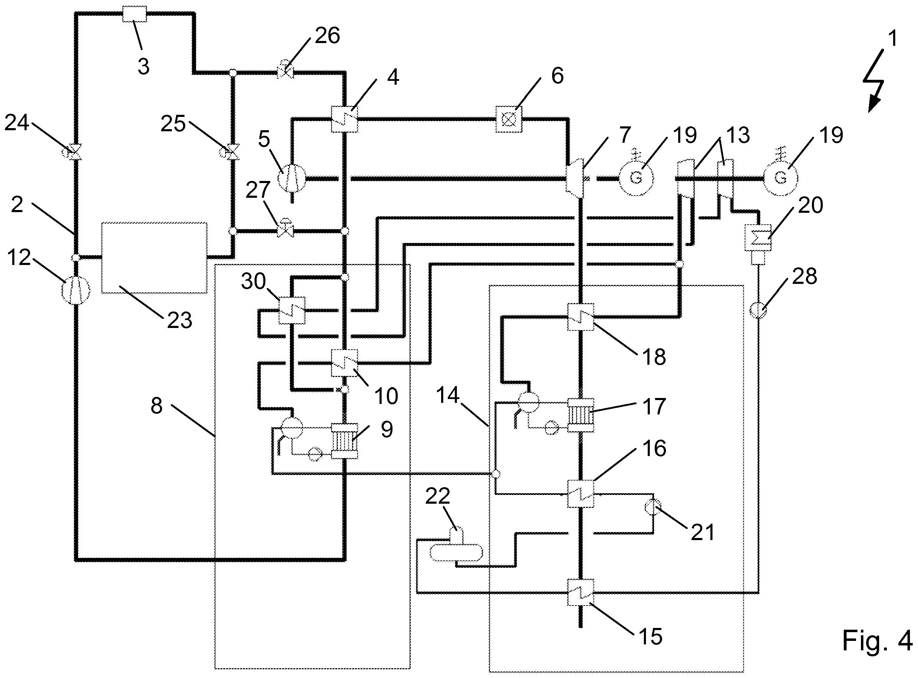

In den Fig. 3 und 4 ist das erfindungsgemäße solarhybridbetriebene Gas- und Dampfkraftwerk 1 mit primärem solaren Wärmeträgerkreislauf 2 mit einer vorteilhaften Ausgestaltung zur Zwischenüberhitzung des Dampfes im Solarkessel 8 dargestellt. Die Zwischenüberhitzung ist sowohl mit getrennten Economizern 11, 16 im Solarkessel 8 und im Abhitzekessel 14 nach Fig. 3 als auch mit einem gemeinsamen Economizer 16 im Abhitzekessel 14 nach Fig. 4 ausführbar.

Dem bereits zum Teil entspannten Dampf der Dampfturbine 13 wird im Zwischenüberhitzer 30 zusätzlich Wärme vom Wärmeträgermedium des Wärmeträgerkreislaufes 2 zugeführt. Der Zwischenüberhitzer 30, dessen Heizflächen zum Beispiel als mit den Heizflächen des Überhitzers 10 verschränkte Heizflächen ausgebildet sind, ist im Wärmeübertragerkreislauf 2 erfindungsgemäß parallel zum Überhitzer 10 geschaltet. Der Zwischenüberhitzer 30 und der Überhitzer 10 können aber ebenso in Reihe zueinander geschaltet sein.
Für eine Betriebsweise ohne Solarwärme oder Speicherwärme und die damit verbundene entfallende Zwischenüberhitzung strömt der Dampf vorteilhaft über eine Bypassleitung der Dampfturbine 13 (nicht in Fig. dargestellt).

Die Zwischenüberhitzung bewirkt eine deutliche Erhöhung der Kreisprozessarbeit beziehungsweise der Stromproduktion und gleichermaßen eine Verringerung des spezifischen Brennstoffwärmeverbrauches. Im Zusammenhang mit dem Solarkessel führt dies zudem zu einer deutlichen Steigerung des Solarwärmeanteils in der Stromerzeugung.

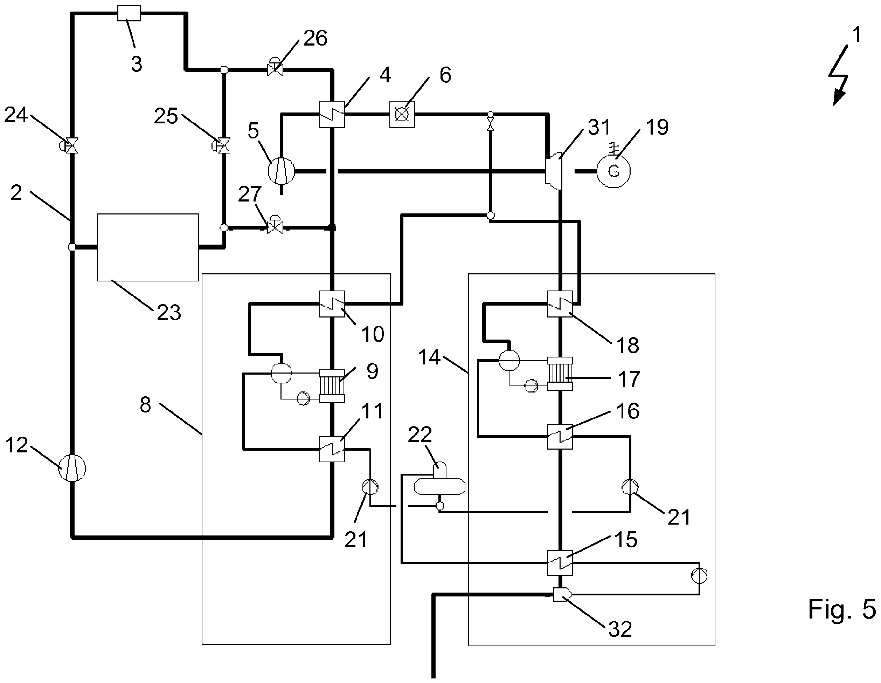

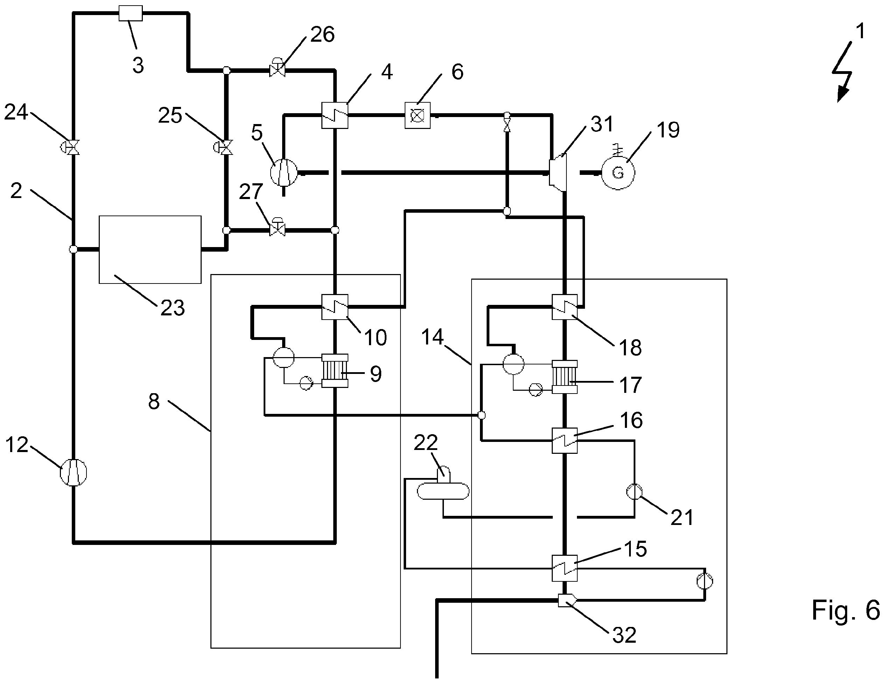

In den Fig. 5 und 6 wird das erfindungsgemäße solarhybridbetriebene Gas- und Dampfkraftwerk 1 mit primärem solaren Wärmeträgerkreislauf 2 mit einer bevorzugten Ausgestaltung der Dampfeinleitung beziehungsweise Dampfzufuhr zur integrierten Gas-Dampf-Turbine 31 gezeigt. Auch die Schaltbilder der Fig. 5 und 6 unterscheiden sich in der Anordnung der Economizer 11 und 16, wie bei den vorangegangenen Figuren bereits beschrieben.
Nach den Schaltbildern der Fig. 5 und 6 ist die ursprüngliche Gasturbinenanlage auch als integrierter Gas-Dampf-Prozess zu betreiben. Dabei wird erfindungsgemäß der im Solarkessel 8 beziehungsweise im Abhitzekessel 14 erzeugte und überhitzte Dampf vor der Turbine zugemischt. Auf eine separate Dampfturbine 13 wird verzichtet. Nach den Fig. 5 und 6 erfolgt die Vermischung von erwärmter Luft und erwärmtem Dampf nach der Konzeption der Erfindung zwischen dem Gasturbinenwärmeübertrager 4 und der Brennkammer 6. Weitere Möglichkeiten des Ortes der Vermischung bestehen zwischen dem Verdichter 5 und dem Gasturbinenwärmeübertrager 4 sowie nach der Brennkammer 6.
Der Betrieb mit einem gemeinsamen Economizer 16 im Abhitzekessel 14 nach Fig. 6 hat weitere entscheidende Vorteile. Im integrierten Gas-Dampf-Prozess wird zum Beispiel Deionat, das bei der Erzeugung sehr hohe Kosten verursacht, im Wasser-Dampfkreislauf verwendet. Das Deionat strömt, ohne zusätzliche Einrichtungen im Kraftwerksprozess, zusammen mit dem Abgasstrom in die Atmosphäre und wird damit dem Kraftwerksprozess nachteilig entzogen. Nur unter Einsatz zusätzlicher abgasseitiger Kühleinrichtungen, wie zum Beispiel einer Kondensationsanlage 32, kann eine Kondensation des Deionats aus dem Abgas erreicht werden. Bestehen jedoch die erfindungsgemäßen Möglichkeiten, zum einen im Solarkessel 8 zusätzlichen Dampf zu erzeugen und zum anderen den Betrieb mit einen gemeinsamen Economizer 16 im Abhitzekessel 14 zu realisieren, wird das Abgas bereits im Abhitzekessel 14 deutlich stärker abgekühlt als in herkömmlichen Anlagen. Der Aufwand einer zusätzlichen Kühlung zur Kondensation des Deionats aus dem Abgas ist somit deutlich reduziert.

Eine bevorzugte Ausgestaltung der Erfindung stellen Anlagen mit energetisch sehr effektiven Gasturbinen mit einem hohen Verdichtungsverhältnis und geringen Abgastemperaturen dar. Mit den geringen Abgastemperaturen ist die Überhitzung des Dampfes im Abhitzekessel 14 nicht oder zumindest nur stark begrenzt möglich, da das Temperaturniveau des Abgases zu gering ist. Konzeptionsgemäß ist der Abhitzekessel 14 dann lediglich mit Economizer 16 und Verdampfer 17 zu betreiben, wobei die Überhitzung des Dampfes vollständig oder zum Teil im Überhitzer 10 des Solarkessels 8 erfolgt.

Eine weitere Ausgestaltung der Erfindung betrifft die solare Dampferzeugung im Solarkessel 8, die entsprechend den Figuren 1 bis 6, parallel zum Abhitzekessel 14 schaltbar ist. Alternativ kann die solare Dampferzeugung jedoch auch in Reihe zum Abhitzekessel 14 geschaltet sein. Je nach Temperaturniveau, würde das Wasser der Dampfturbinenanlage im Abhitzekessel 14 verdampft und im Solarkessel 8 überhitzt werden.

### LISTE DER BEZUGSZEICHEN

- 1: Solarhybridbetriebenes Gas- und Dampfkraftwerk
- 2: Wärmeträgerkreislauf
- 3: Receiver / Turmreceiver
- 4: Gasturbinenwärmeübertrager
- 5: Verdichter
- 6: Brennkammer
- 7: Gasturbine
- 8: Solarkessel
- 9: Verdampfer
- 10: Überhitzer
- 11: Economizer
- 12: Umlaufgebläse
- 13: Dampfturbine
- 14: Abhitzekessel
- 15: Speisewasservorwärmer
- 16: Economizer
- 17: Verdampfer
- 18: Überhitzer
- 19: Generator
- 20: Dampfturbinenkondensator
- 21: Kesselspeisepumpe
- 22: Speisewasserbehälter
- 23: Hochtemperaturwärmespeicher
- 24, 25, 26, 27: Ventil
- 28: Kondensatpumpe
- 29: Kesselspeisepumpe
- 30: Zwischenüberhitzer
- 31: integrierte Gas-Dampf-Turbine
- 32: Kondensationsanlage

## Patentansprüche

1. Solarhybridbetriebenes Gas- und Dampfkraftwerk (1) mit einer Solaranlage, einer Gasturbinenanlage und einer Dampfturbinenanlage, wobei
- die Solaranlage einen Receiver (3),
- die Gasturbinenanlage eine Gasturbine (7) mit einem nachgeschalteten Abhitzekessel (14) und
- die Dampfturbinenanlage eine Dampfturbine (13) mit einem Speisewasservorwärmer (15)
aufweist, **dadurch gekennzeichnet, dass** ein Wärmeträgerkreislauf (2) zum Übertragen solarer Wärme vorgesehen ist, wobei der Wärmeträgerkreislauf (2) über einen Gasturbinenwärmeübertrager (4) mit der Gasturbinenanlage und über einen Solarkessel (8) mit der Dampfturbinenanlage gekoppelt ist, wobei der Gasturbinenwärmeübertrager (4) innerhalb der Gasturbinenanlage zwischen einem Verdichter (5) und einer Brennkammer (6) und innerhalb des Wärmeträgerkreislaufs (2) in Strömungsrichtung nach dem Receiver (3) angeordnet ist.

2. Solarhybridbetriebenes Gas- und Dampfkraftwerk (1) mit einer Solaranlage und einer integrierten Gas-Dampf-Turbine (31), wobei
- die Solaranlage einen Receiver (3) und
- die integrierte Gas-Dampf-Turbine (31) einen nachgeschalteten Abhitzekessel (14)
aufweist, **dadurch gekennzeichnet, dass** ein Wärmeträgerkreislauf (2) zum Übertragen solarer Wärme vorgesehen ist, wobei der Wärmeträgerkreislauf (2) über einen Gasturbinenwärmeübertrager (4) und über einen Solarkessel (8) mit der integrierten Gas-Dampf-Turbine (31) gekoppelt ist.

3. Solarhybridbetriebenes Gas- und Dampfkraftwerk (1) nach Anspruch 1 oder 2, **dadurch gekennzeichnet, dass** der Wärmeträgerkreislauf (2) als geschlossener Kreislauf ausgebildet ist und als Wärmeträgermedium Gase, wie Luft, Kohlendioxid, Helium oder Stickstoff, verwendet werden.

4. Solarhybridbetriebenes Gas- und Dampfkraftwerk (1) nach einem der Ansprüche 1 bis 3, **dadurch gekennzeichnet, dass** der Receiver (3) als Turmreceiver ausgestaltet ist.

5. Solarhybridbetriebenes Gas- und Dampfkraftwerk (1) nach einem der Ansprüche 2 bis 4, **dadurch gekennzeichnet, dass** der Gasturbinenwärmeübertrager (4) innerhalb der Gasturbinenanlage zwischen dem Verdichter (5) und der Brennkammer (6) und innerhalb des Wärmeträgerkreislaufs (2) in Strömungsrichtung nach dem Receiver (3) angeordnet ist.

6. Solarhybridbetriebenes Gas- und Dampfkraftwerk (1) nach einem der Ansprüche 1 bis 5, **dadurch gekennzeichnet, dass** der Wärmeträgerkreislauf (2) einen Bypass um den Gasturbinenwärmeübertrager (4) aufweist.

7. Solarhybridbetriebenes Gas- und Dampfkraftwerk (1) nach einem der Ansprüche 1 bis 6, **dadurch gekennzeichnet, dass** im Abhitzekessel (14) ein Economizer (16) angeordnet ist.

8. Solarhybridbetriebenes Gas- und Dampfkraftwerk (1) nach einem der Ansprüche 1 bis 7, **dadurch gekennzeichnet, dass** im Solarkessel (8) ein Economizer (11) angeordnet ist.

9. Solarhybridbetriebenes Gas- und Dampfkraftwerk (1) nach einem der Ansprüche 1 bis 8, **dadurch gekennzeichnet, dass** die Dampfturbinenanlage einen Zwischenüberhitzer (30) aufweist.

10. Solarhybridbetriebenes Gas- und Dampfkraftwerk (1) nach einem der Ansprüche 1 bis 9, **dadurch gekennzeichnet, dass** der Wärmeträgerkreislauf (2) einen Hochtemperaturwärmespeicher (23) aufweist.

11. Verfahren zum Betrieb eines solarhybridbetriebenen Gas- und Dampfkraftwerks (1) nach einem der Ansprüche 1 bis 10 mit einem Gas- und Dampfturbinenprozess, wobei mittels eines Wärmeträgerkreislaufs (2) mit einem Gasturbinenwärmeübertrager (4) und einem Solarkessel (8) solare Wärme sowohl in den Gasturbinenprozess als auch in den Dampfturbinenprozess eingekoppelt wird.

12. Verfahren nach Anspruch 11, **dadurch gekennzeichnet, dass** das gasförmige Wärmeträgermedium innerhalb des geschlossenen Wärmeträgerkreislaufs (2) unter einem aufgeprägten Überdruck strömt und das Druckniveau des gasförmigen Wärmeträgermediums geregelt wird.

13. Verfahren nach Anspruch 11 oder 12, **dadurch gekennzeichnet, dass** über den im Wärmeträgerkreislauf (2) um den Gasturbinenwärmeübertrager (4) angeordneten Bypass die Temperatur des Wärmeträgermediums in Strömungsrichtung nach dem Gasturbinenwärmeübertrager (4) geregelt wird.

14. Verfahren nach einem der Ansprüche 11 bis 13, **dadurch gekennzeichnet, dass** das im Economizer (16) des Abhitzekessels (14) vorgewärmte Speisewasser des Dampfprozesses auf einen Verdampfer (9) im Solarkessel (8) und einen Verdampfer (17) im Abhitzekessel (14) aufgeteilt wird, wobei die Aufteilung des Massenstroms des Speisewassers zwischen den Verdampfern (9, 17) stufenlos geregelt wird.

15. Verfahren nach einem der Ansprüche 11 bis 14, **dadurch gekennzeichnet, dass** das Druckniveau im Abhitzekessel (14) in Abhängigkeit der solaren Wärme nach dem Gleitdruckprinzip geregelt wird.

## Claims

1. Solar hybrid-powered gas and steam power plant (1) with a solar plant, a gas turbine plant and a steam turbine plant, whereby
- the solar system has a receiver (3),
- the gas turbine plant has a gas turbine (7) with a downstream waste heat boiler (14), and
- the steam turbine plant has a steam turbine (13) has a feed-water pre-heater (15)
**characterised in that** a heat transfer circuit (2) is provided for transferring solar heat, whereby the heat transfer circuit (2) is coupled to the gas turbine plant via a gas turbine heat exchanger (4) and to the steam turbine plant via a solar boiler (8), whereby the gas turbine heat exchanger (4) is arranged within the gas turbine plant between a compressor (5) and a combustion chamber (6) and within the heat transfer circuit (2) downstream of the receiver (3) in the direction of flow.

2. Solar hybrid-powered gas and steam power plant (1) with a solar plant and an integrated gas-steam turbine (31), whereby
- the solar system has a receiver (3), and
- the integrated gas-steam turbine (31) has a downstream waste heat boiler (14)
**characterised in that** a heat transfer circuit (2) is provided for transferring solar heat, whereby the heat transfer circuit (2) is coupled to the integrated gas-steam turbine (31) via a gas turbine heat exchanger (4) and via a solar boiler (8).

3. Solar hybrid-powered gas and steam power plant (1) according to claim 1 or 2, **characterised in that** the heat transfer circuit (2) is designed as a closed circuit and gases such as air, carbon dioxide, helium or nitrogen are used as the heat transfer medium.

4. Solar hybrid-powered gas and steam power plant (1) according to one of claims 1 to 3, **characterised in that** the receiver (3) is designed as a tower receiver.

5. Solar hybrid-powered gas and steam power station (1) according to one of claims 2 to 4, **characterised in that** the gas turbine heat exchanger (4) is arranged inside the gas turbine plant between the compressor (5) and the combustion chamber (6) and inside the heat transfer circuit (2) downstream of the receiver (3) in the direction of flow.

6. Solar hybrid-powered gas and steam power plant (1) according to one of claims 1 to 5, **characterised in that** the heat transfer circuit (2) has a bypass around the gas turbine heat exchanger (4).

7. Solar hybrid-powered gas and steam power plant (1) according to one of claims 1 to 6, **characterised in that** an economizer (16) is arranged in the waste heat boiler (14).

8. Solar hybrid-powered gas and steam power plant (1) according to one of claims 1 to 7, **characterised in that** an economizer (11) is arranged in the solar boiler (8).

9. Solar hybrid-powered gas and steam power plant (1) according to one of claims 1 to 8, **characterised in that** the steam turbine plant has reheater (30).

10. Solar hybrid-powered gas and steam power plant (1) according to one of claims 1 to 9, **characterised in that** the heat transfer circuit (2) has a high temperature heat reservoir (23).

11. Method for operating a solar hybrid-powered gas and steam power plant (1) according to one of the claims 1 to 10 with a gas and steam turbine process, whereby solar heat is integrated into both the gas turbine process and the steam turbine process by means of a heat transfer circuit (2) with a gas turbine heat exchanger (4) and a solar boiler (8).

12. Method according to claim 11, **characterised in that** the gaseous heat transfer medium flows within the closed heat transfer circuit (2) under pressure and the modulates the pressure level of the gaseous heat transfer medium.

13. Method according to claim 11 or 12, **characterised in that** the temperature of the heat transfer medium is regulated in the direction of the flow downstream of the gas turbine heat exchanger (4) via the bypass arranged around the gas turbine heat exchanger (4) in the heat transfer circuit (2).

14. Method according to one of the claims 11 to 13, **characterised in that** the feed water for the steam process preheated in the economizer (16) of the waste heat boiler (14) is divided between an evaporator (9) in the solar boiler (8) and an evaporator (17) in the waste heat boiler (14), whereby the division of the flow of the feed water between the evaporators (9, 17) is infinitely variable.

15. Method according to one of claims 11 to 14, **characterised in that** the pressure level in the waste heat boiler (14) is controlled according to the sliding pressure principle in dependence on the solar heat.

## Revendications

1. Centrale à gaz et à vapeur à énergie hybride solaire (1) avec une installation solaire, une installation de turbine à gaz et une installation de turbine à vapeur,
- l'installation solaire disposant d'un récepteur (3),
- l'installation de turbine à gaz disposant d'une turbine à gaz (7) avec une chaudière de récupération (14) raccordée en aval et
- l'installation de turbine à vapeur disposant d'une turbine à vapeur (13) avec un préchauffeur d'eau d'alimentation (15),
**caractérisée en ce que** un circuit caloporteur (2) est prévu pour transmettre la chaleur solaire, ce circuit caloporteur (2) étant couplé via un échangeur thermique de turbine à gaz (4) avec l'installation de turbine à gaz et via une chaudière solaire (8) avec l'installation de turbine à vapeur, l'échangeur thermique de turbine à gaz (4) étant disposé au sein de l'installation de turbine à gaz entre un compresseur (5) et une chambre de combustion (6) et au sein du circuit caloporteur (2) en aval du récepteur (3) dans le sens de l'écoulement.

2. Centrale à gaz et à vapeur à énergie hybride solaire (1) avec une installation solaire et une turbine à gaz et à vapeur (31) intégrée,
- l'installation solaire disposant d'un récepteur (3) et
- la turbine à gaz et à vapeur (31) intégrée disposant d'une chaudière de récupération (14) raccordée en aval,
**caractérisée en ce que** un circuit caloporteur (2) est prévu pour transmettre la chaleur solaire, le circuit caloporteur (2) étant couplé via un échangeur thermique de turbine à gaz (4) et via une chaudière solaire (8) à la turbine à gaz et à vapeur (31) intégrée.

3. Centrale à gaz et à vapeur à énergie hybride solaire (1) selon la revendication 1 ou 2, **caractérisée en ce que** le circuit caloporteur (2) est un circuit fermé utilisant comme fluide caloporteur des gaz, à savoir de l'air, du dioxyde de carbone, de l'hélium ou de l'azote.

4. Centrale à gaz et à vapeur à énergie hybride solaire (1) selon l'une des revendications 1 à 3, **caractérisée en ce que** le récepteur (3) est conçu sous forme de tour.

5. Centrale à gaz et à vapeur à énergie hybride solaire (1) selon l'une des revendications 2 à 4, **caractérisée en ce que** l'échangeur thermique de turbine à gaz (4) est disposé, au sein de l'installation de turbine à gaz, entre le compresseur (5) et la chambre de combustion (6) et, au sein du circuit caloporteur (2), en aval du récepteur (3) dans le sens de l'écoulement.

6. Centrale à gaz et à vapeur à énergie hybride solaire (1) selon l'une des revendications 1 à 5, **caractérisée en ce que** le circuit caloporteur (2) dispose d'une dérivation autour de l'échangeur thermique de turbine à gaz (4).

7. Centrale à gaz et à vapeur à énergie hybride solaire (1) selon l'une des revendications 1 à 6, **caractérisée en ce que** un économiseur (16) est disposé dans la chaudière de récupération (14).

8. Centrale à gaz et à vapeur à énergie hybride solaire (1) selon l'une des revendications 1 à 7, **caractérisée en ce que** un économiseur (11) est disposé dans la chaudière solaire (8).

9. Centrale à gaz et à vapeur à énergie hybride solaire (1) selon l'une des revendications 1 à 8, **caractérisée en ce que** l'installation de turbine à vapeur dispose d'un surchauffeur intermédiaire (30).

10. Centrale à gaz et à vapeur à énergie hybride solaire (1) selon l'une des revendications 1 à 9, **caractérisée en ce que** le circuit caloporteur (2) dispose d'un accumulateur de chaleur à température élevée (23).

11. Procédé d'exploitation d'une centrale à gaz et à vapeur à énergie hybride solaire (1) selon l'une des revendications 1 à 10 avec un processus de turbine à gaz et à vapeur, un circuit caloporteur (2) permettant un couplage de la chaleur solaire avec un échangeur de turbine à gaz (4) et une chaudière solaire (8) à la fois dans le processus de la turbine à gaz et dans le processus de la turbine à vapeur.

12. Procédé selon la revendication 11, **caractérisé en ce que** le fluide caloporteur sous forme de gaz s'écoule au sein du circuit caloporteur fermé (2) en étant soumis à une forte surpression et que le niveau de pression du fluide caloporteur est régulé.

13. Procédé selon la revendication 11 ou 12, **caractérisé en ce que**, via la dérivation disposée dans le circuit caloporteur (2) autour de l'échangeur thermique de la turbine à gaz (4), la température du fluide caloporteur est régulée en aval de l'échangeur de chaleur de la turbine à gaz (4) dans le sens de l'écoulement.

14. Procédé selon l'une des revendications 11 à 13, **caractérisé en ce que** l'eau d'alimentation du processus de vapeur préchauffée dans l'économiseur (16) de la chaudière de récupération (14) est répartie entre un évaporateur (9) dans la chaudière solaire (8) et un évaporateur (17) dans la chaudière de récupération (14), la répartition du débit massique de l'eau d'alimentation entre les évaporateurs (9, 17) étant régulée en continu.

15. Procédé selon l'une des revendications 11 à 14, **caractérisé en ce que** le niveau de pression dans la chaudière de récupération (14) est régulé selon le principe du fonctionnement à pression variable, en fonction de la chaleur solaire.
